# EUROPÄISCHE PATENTANMELDUNG

(11) **EP 2 065 156 A1**
(43) Veröffentlichungstag der Anmeldung: **03.06.2009**
(21) Anmeldenummer: 07291426.0
(22) Anmeldetag: 29.11.2007
(51) Int. Cl.: B29C 44/34, C08F 14/26, B29C 47/00

(54) **Verfahren zur Erzeugung eines Formkörpers aus geschäumten Polytetrafluorethylen**

(71) Anmelder: Nexans, 75008 Paris (FR)
(72) Erfinder: Brix, Susanne, 90542 Eckental (DE); Müller, Friedrich, 91207 Lauf (DE); Lankes, Christian, 90537 Feucht (DE); Gemmel, Alfred, 90562 Kalchreuth (DE); Pinto Olivier, 69003 Lyon (FR); Abeguile Mikael, 69630 Chaponost (FR); Alric Jérôme, 38080 L' Isle d' Abeau (FR); Auvray Thierry, Lancaster PA 17601 (US); Kroushl Paul, Lancaster PA 17601 (US)
(74) Vertreter: Feray, Valérie

(57) **Zusammenfassung**

Es wird ein Verfahren zur Erzeugung eines Formkörpers aus geschäumtem Polytetrafluorethylen mittels eines Extruders angegeben, bei welchem dem Polytetrafluorethylen ein die Aufschäumung bewirkendes Aufschäummittel zugeführt wird. Als Extruder wird ein handelsüblicher Extruder verwendet, dem ein thermoplastisch verarbeitbares, aufschmelzbares Polytetrafluorethylen aufgegeben wird. Das Polytetrafluorethylen wird dem Extruder zusammen mit einem chemisch wirkenden Aufschäummittel aufgegeben oder es wird dem Polytetrafluorethylen im aufgeschmolzenen Zustand im Extruder ein Gas zugeführt. Der Formkörper wird nach seinem Austritt aus dem Extruder ohne weitere, den Aufschäumvorgang betreffende Maßnahmen in Produktionsrichtung abgezogen.

## Beschreibung

Die Erfindung bezieht sich auf ein Verfahren zur Erzeugung eines Formkörpers aus geschäumtem Polytetrafluorethylen mittels eines Extruders, bei welchem dem Polytetrafluorethylen ein die Aufschäumung bewirkendes Aufschäummittel zugeführt wird (DE 100 03 587 A1).

Polytetrafluorethylen - im folgenden kurz "PTFE" genannt - ist ein für elektrische Anwendungen hervorragend geeignetes Material. Es hat eine niedrige Dielektrizitätszahl und einen geringen Verlustfaktor. Die dielektrischen Eigenschaften können noch verbessert werden, wenn das PTFE aufgeschäumt wird. Da dieses Material auch bei hohen Temperaturen beständig ist und nicht brennt, kann es außer für elektrische Zwecke grundsätzlich auf allen technischen Gebieten eingesetzt werden.

Dieses also für viele Anwendungen geeignete Material läßt sich in bekannter Technik nur mit der sogenannten Pastenextrusion oder auch Ramextrusion verarbeiten. Dazu wird das PTFE in Pulverform in einen Pastenextruder gefüllt und mittels eines Stempels in eine angeschlossene Form gepreßt. Das gilt auch für den nach der eingangs erwähnten DE 100 03 587 A1 hergestellten PTFE-Schaum. Zur Herstellung desselben wird dem PTFE-Pulver ein chemisch wirkender Schaumbildner beigemengt und das Material wird während eines Sintervorgangs mit entsprechender Wärmezufuhr im fertigen Formkörper aufgeschäumt. Die Herstellung eines entsprechenden Formkörpers ist also relativ aufwendig. Außerdem ist die Länge so herstellbarer Formkörper beschränkt.

Der Erfindung liegt die Aufgabe zugrunde, das eingangs geschilderte Verfahren so zu gestalten, daß ein Formkörper aus geschäumtem PTFE einfacher und in beliebiger Länge hergestellt werden kann.

Diese Aufgabe wird gemäß der Erfindung dadurch gelöst,
- daß als Extruder ein handelsüblicher Extruder verwendet wird, dem ein thermoplastisch verarbeitbares, aufschmelzbares PTFE aufgegeben wird,
- daß das PTFE dem Extruder zusammen mit einem chemisch wirkenden Aufschäummittel aufgegeben wird oder
- daß dem PTFE im aufgeschmolzenen Zustand im Extruder ein Gas zugeführt wird und
- daß der Formkörper nach seinem Austritt aus dem Extruder ohne weitere, den Aufschäumvorgang betreffende Maßnahmen in Produktionsrichtung abgezogen wird.

Auf dem Markt ist ein thermoplastisch verarbeitbares PTFE erhältlich, das aufgeschmolzen werden kann und somit in herkömmlicher Technik extrudierbar ist. Es handelt sich um ein modifiziertes PTFE, dem neben anderen Zusätzen beispielsweise Seitenketten mit Sauerstoffatomen angeknüpft sind. Diese Modifizierung führt zu einer Verringerung der Viskosität des PTFEs. Es beginnt bei einer Temperatur von etwa 320 °C zu schmelzen und kann bei darüber liegenden Temperaturen thermoplastisch verarbeitet, also mit handelsüblichen Maschinen extrudiert werden.

Trotz der hohen, für das Aufschmelzen des PTFEs erforderlichen Temperaturen gelingt es mit dem Verfahren nach der Erfindung, aus einem solchen PTFE geschäumte Formkörper herzustellen. Es hat sich überraschend herausgestellt, daß auch für dieses extrudierbare PTFE eine chemische und physikalische Aufschäumung dann möglich ist, wenn die richtigen Mittel eingesetzt werden. Das ist einerseits ein chemisch wirkendes Aufschäummittel, dessen Zersetzung bei einer Temperatur von 320 °C oder darüber liegenden Temperaturen beginnt. Andererseits können bei Anwendung eines ausreichenden Drucks übliche Gase, wie N₂ oder CO₂, für das physikalische Aufschäumen eingesetzt werden.

Durch die Erfindung ist es daher möglich, Formkörper aus geschäumtem PTFE mittels handelsüblicher Extruder herzustellen. Nach dem Austritt der Formkörper aus dem Extruder sind keine weiteren, den Aufschäumvorgang betreffende Maßnahmen erforderlich, da die Reaktionsmittel zur Erzeugung der Aufschäumung bereits im Extruder vorhanden sind bzw. in demselben zugeführt werden und die Schmelzzone des Extruders die zum Aufschäumen erforderliche Reaktionswärme aufweist, so daß der Aufschäumprozeß bereits im Extruder abläuft. Weitere, den Aufschäumvorgang betreffende Maßnahmen sind nach dem Austritt der Formkörper aus dem Extruder und der nachfolgenden Abkühlung nicht erforderlich. Ein so erzeugter Formkörper kann dann direkt weiteren Arbeitsschritten zugeführt werden, wozu beispielsweise das Aufwickeln auf eine Spule gehört.

Für das chemische Aufschäumen wird als Aufschäummittel Ammoniumpolyphosphat eingesetzt. Dieses Material zersetzt sich bei Temperaturen zwischen 340 °C und 375 °C. Es bewirkt aufgrund dieser hohen Zersetzungstemperatur und aufgrund anderer vorteilhafter Eigenschaften das Aufschäumen des aufschmelzbaren und extrudierbaren PTFEs. Das Ammoniumpolyphosphat wird dem PTFE in einer geringen Menge zugesetzt, gegebenenfalls zusammen mit einem Nukleierungsmittel.

Ausführungsbeispiele des Verfahrens nach der Erfindung werden im folgenden erläutert.

Das Verfahren läßt sich grundsätzlich zur Herstellung beliebiger Formkörper einsetzen, solange dieselben mit einem handelsüblichen Extruder herstellbar sind. Solche Formkörper sind beispielsweise Stangen, Rohre und Bänder. Mit besonderem Vorteil wird das Verfahren zur Herstellung von Isolierungen für elektrische Leiter und von Mänteln für Leitungen und Kabel sowie zur Erzeugung des Dielektrikums von koaxialen Hochfrequenzkabeln verwendet.

Zur Herstellung eines Formkörpers aus PTFE wird einem Extruder beispielsweise ein Gemisch aus PTFE, einem chemischen Aufschäummittel und gegebenenfalls einem Nukleierungsmittel aufgegeben. Als Aufschäummittel wird Ammoniumpolyphosphat verwendet, das dem PTFE bei 100 Gewichts-% PTFE in einer zwischen 0,05 und 3,0 Gewichts-% liegenden Menge hinzugefügt wird. Ein Nukleierungsmittel, mit Vorteil Bornitrat, kann zusätzlich in einer zwischen 0,5 und 1,5 Gewichts-% liegenden Menge aufgegeben werden. Nach Inbetriebnahme wird der Extruder auf eine in seiner Schmelzzone herrschende Temperatur von mindestens 340 °C aufgeheizt, vorzugsweise auf 350 °C. Die dem Extruder aufgegebene Mischung wird in der Schmelzzone aufgeschmolzen, so daß der Aufschäumvorgang durch Zersetzen des Ammoniumpolyphosphats beginnt. Er läuft im wesentlichen bereits im Extruder ab, so daß aus demselben ein Formkörper aus geschäumtem PTFE austritt. Dieser Formkörper kann - wie bereits erwähnt - nach Abkühlung direkt einer Weiterverarbeitung zugeführt werden.

In bevorzugter Ausführungsform wird als Ausgangsprodukt ein PTFE verwendet, dem - bezogen auf 100 Gewichts-% PTFE - 0,15 Gewichts-% Ammoniumpolyphosphat und gegebenenfalls 1,0 Gewichts-% Borsilikat als Nukleierungsmittel beigemengt sind. Auf das Nukleierungsmittel kann bei der chemischen Aufschäumung des PTFEs aber auch verzichtet werden.

Das Verfahren nach der Erfindung wird alternativ zum chemischen Aufschäumen des PTFEs auch für ein physikalisches Aufschäumen eingesetzt. Dem Ausgangsmaterial von 100 Gewichts-% PTFE wird hier eine zwischen 0,5 und 1,5 Gewichts-% liegende Menge eines Nukleierungsmittels, vorzugsweise Bornitrat, beigemengt. Dieses Gemisch wird in einem Extruder bei einer Temperatur von mindestens 320 °C aufgeschmolzen. In der Schmelzzone des Extruders wird dem PTFE ein Gas mit einem Druck zugeführt, der zwischen 5 bar und 800 bar liegen kann. Als Gase eignen sich besonders N₂ und CO₂. Auch bei dieser Variante des Verfahrens läuft der Aufschäumvorgang im wesentlichen im Extruder ab, so daß aus demselben ein Formkörper aus geschäumtem PTFE austritt. Er kann nach Abkühlung wieder direkt einer Weiterverarbeitung zugeführt werden.

Mit dem Verfahren nach der Erfindung herstellbare Formkörper sind - wie bereits weiter oben erwähnt - beispielsweise Stangen, Rohre, Bänder, Isolierungen und Mäntel für Leitungen.

Ein weiteres vorteilhaftes Einsatzgebiet für das Verfahren nach der Erfindung ist die Erzeugung eines aus geschäumtem PTFE bestehenden Dielektrikums für koaxiale Hochfrequenzkabel, das insbesondere hervorragende elektrische Eigenschaften hat. Das als Abstandshalter zwischen dem Innenleiter und dem konzentrischen Außenleiter des Koaxialkabels liegende Dielektrikum kann zur weiteren Verbesserung seiner elektrischen Eigenschaften auch mit in Längsrichtung des Kabels verlaufenden Kanälen ausgerüstet sein. Ein entsprechendes koaxiales Hochfrequenzkabel mit einem Dielektrikum aus ungeschäumtem Material geht beispielsweise aus der EP 0 803 878 B1 hervor.

## Patentansprüche

1. Verfahren zur Erzeugung eines Formkörpers aus geschäumtem Polytetrafluorethylen mittels eines Extruders, bei welchem dem Polytetrafluorethylen ein die Aufschäumung bewirkendes Aufschäummittel zugeführt wird, **dadurch gekennzeichnet,**
- **daß** als Extruder ein handelsüblicher Extruder verwendet wird, dem ein thermoplastisch verarbeitbares, aufschmelzbares Polytetrafluorethylen aufgegeben wird,
- **daß** das Polytetrafluorethylen dem Extruder zusammen mit einem chemisch wirkenden Aufschäummittel aufgegeben wird und
- **daß** der Formkörper nach seinem Austritt aus dem Extruder ohne weitere, den Aufschäumvorgang betreffende Maßnahmen in Produktionsrichtung abgezogen wird.

2. Verfahren zur Erzeugung eines Formkörpers aus geschäumtem Polytetrafluorethylen mittels eines Extruders, bei welchem dem Polytetrafluorethylen ein die Aufschäumung bewirkendes Aufschäummittel zugeführt wird, **dadurch gekennzeichnet,**
- **daß** als Extruder ein handelsüblicher Extruder verwendet wird, dem ein thermoplastisch verarbeitbares, aufschmelzbares Polytetrafluorethylen aufgegeben wird,
- **daß** dem Polytetrafluorethylen im aufgeschmolzenen Zustand im Extruder ein Gas zugeführt wird und
- **daß** der Formkörper nach seinem Austritt aus dem Extruder ohne weitere, den Aufschäumvorgang betreffende Maßnahmen in Produktionsrichtung abgezogen wird.

3. Verfahren nach Anspruch 1, **dadurch gekennzeichnet, daß** dem Polytetrafluorethylen ein Aufschäummittel mit einer Zersetzungstemperatur von mindestens 320 °C aufgegeben wird.

4. Verfahren nach Anspruch 3, **dadurch gekennzeichnet, daß** dem Polytetrafluorethylen als Aufschäumungsmittel Ammoniumpolyphosphat in einer zwischen 0,5 und 3,0 Gewichts-% liegenden Menge hinzugegeben wird, bezogen auf 100 Gewichts-% Polytetrafluorethylen.

5. Verfahren nach Anspruch 3, **dadurch gekennzeichnet, daß** dem Polytetrafluorethylen als Aufschäummittel 0,15 Gewichts-% Ammoniumphosphat hinzugegeben werden, bezogen auf 100 Gewichts-% Polytetrafluorethylen.

6. Verfahren nach einem der Ansprüche 3 bis 5, **dadurch gekennzeichnet, daß** dem Polytetrafluorethylen zusätzlich ein Nukleierungsmittel in einer zwischen 0,5 und 1,5 Gewichts-% liegenden Menge hinzugegeben wird, bezogen auf 100 Gewichts-% Polytetrafluorethylen.

7. Verfahren nach Anspruch 2, **dadurch gekennzeichnet, daß** dem Polytetrafluorethylen ein Nukleierungsmittel in einer zwischen 0,5 und 1,5 Gewichts-% liegenden Menge hinzugegeben wird, bezogen auf 100 Gewichts-% Polytetrafluorethylen.
